# EUROPÄISCHE PATENTSCHRIFT

(11) **EP 2 637 817 B1**
(45) Veröffentlichungstag und Bekanntmachung des Hinweises auf die Patenterteilung: **15.07.2015**
(21) Anmeldenummer: 12724066.1
(22) Anmeldetag: 11.05.2012
(51) Int. Cl.: B23K 9/095, B23K 9/127, G01S 13/88, B23K 31/12

(54) **VERFAHREN ZUR POSITIONIERUNG EINES SCHWEISSKOPFES MITTELS MIKROWELLEN**
METHOD FOR POSITIONING A WELDING HEAD BY MEANS OF MICROWAVES
PROCÉDÉ DE POSITIONNEMENT D'UNE TÊTE DE SOUDAGE À L'AIDE DE MICRO-ONDES

(30) Priorität: 12.05.2011 AT 6762011
(43) Veröffentlichungstag der Anmeldung: 18.09.2013
(73) Patentinhaber: Fronius International GmbH, 4643 Pettenbach (AT)
(72) Erfinder: HADERER, Andreas, A-4312 Ried in der Riedmark (AT); STELZER, Andreas, A-4040 Linz (AT)
(74) Vertreter: Sonn & Partner Patentanwälte
(86) Internationale Anmeldenummer: PCT/AT2012/000133
(87) Internationale Veröffentlichungsnummer: WO 2012/151597

(56) Entgegenhaltungen:
- EP-B1- 1 094 913
- UMEAGUKWU C ET AL: "ROBOTIC ACOUSTIC SEAM TRACKING: SYSTEM DEVELOPMENT AND APPLICATION", IEEE TRANSACTIONS ON INDUSTRIAL ELECTRONICS, IEEE SERVICE CENTER, PISCATAWAY, NJ, USA, Bd. 36, Nr. 3, 1. August 1989 (1989-08-01) , Seiten 338-348, XP000047823, ISSN: 0278-0046, DOI: 10.1109/41.31496
- KUSCH M ET AL: "Anwendungsmoeglichkeiten der Radarsensorik beim Metall-Schutzgasschweissen", SCHWEISSEN UND SCHNEIDEN, DVS VERLAG, DUSSELDORF, DE, Bd. 60, Nr. 1, 1. Januar 2008 (2008-01-01) , Seiten 24,26-28, XP001518260, ISSN: 0036-7184

## Beschreibung

Die Erfindung betrifft ein Verfahren zur Positionierung eines Schweißkopfes einer Roboterschweißanlage über einem Werkstück, wobei zur Positionsbestimmung ein Messsignal in Form von Mikrowellen von einem am Schweißkopf angeordneten Sender an das Werkstück gesendet wird und die am Werkstück reflektierten Mikrowellen von zumindest einem am Schweißkopf angeordneten Empfänger empfangen werden, und die empfangenen Mikrowellen zur Positionsbestimmung einer Kante am Werkstück von einem Auswertemodul ausgewertet werden.

Die Positionierung von Geräten zum thermischen Fügen und Schneiden ist entscheidend für die Qualität der Verbindung bzw. des Schneidvorgangs, wobei die Positionierung unter Einflüssen, wie Rauch, Spritzer, hohe Temperaturen, starke UV Strahlung, elektromagnetische Felder usw., durchzuführen ist.

Zur Positionierung sind entsprechende Sensoren erforderlich, wobei Radarsensoren gegenüber den erwähnten Einflüssen relativ unempfindlich sind. Beispielsweise werden Radarsensoren zur Vermessung der Nahtgeometrie und zur Kantendetektion bei Schweißverfahren eingesetzt, indem eine Dauerstrich (Continuous Wave CW)-Messung zur Erfassung von Abstandsänderungen durchgeführt wird.

Dabei bestrahlen die Radarsensoren mittels einer Antenne einen Bereich von üblicherweise mehreren Zentimetern im Durchmesser. Das hat zur Folge, dass die reflektierte Welle, welche durch die Antenne empfangen wird, einer Überlagerung der im ausgeleuchteten Gebiet auftretenden Reflexionen entspricht. Somit findet immer eine Superposition an der Empfangsantenne statt, wodurch Abstandssprünge im Radarsignal stark verschliffen werden und die Positionsbestimmung erschwert wird. Vor allem ist die Nahtverfolgung von Stumpfstößen mittels Abstandsmessung dadurch unmöglich, da die Spaltbreite bei realen Anwendungen weit unter dem Durchmesser des bestrahlten Bauteilbereichs liegt und somit durch die Mittelwertbildung im Rauschen verschwindet.

Gemäß der EP 1 094 913 B1 wird beispielsweise ein Radarsensor mit einer Antenne als Sender und Empfänger zur Überwachung der Schweißnähte bei einem Schweißprozess beschrieben. Da der Radarsensor nachlaufend angeordnet ist, kann damit keine Nahtverfolgung realisiert werden. Auch ist der Radarsensor durch die Anordnung über der heißen Schweißnaht einer starken thermischen Beanspruchung ausgesetzt. Die genaue Vermessung der Nahtgeometrie erfordert weiters eine extrem hohe Signalbandbreite.

Aus den Artikeln "Robotic Acoustic Seam Tracking: System Development and Application" (Umeagukwu C. Et al; IEEE Transactions on Industrial Electronics, IEEE Service Center, Piscataway, NJ, USA, Bd. 36, Nr. 3, 1. August 1989, Seiten 338-348, XP000047823, ISSN: 0278-0046, DOI: 10.1109/41.31496) und "Anwendungsmöglichkeiten der Radarsensorik beim Metall-Schutzgasschweißen" (Kusch M. Et al; Schweissen und Schneiden, DVS Verlag, Düsseldorf, DE, Bd. 60, Nr. 1, 1. Januar 2008, Seiten 24, 26-28, XP001518260, ISSN: 0036-7184) sind Verfahren der gegenständlichen Art bekannt geworden, bei welchen eine Oszillation des Sensors durchgeführt wird.

Allgemein sind schmalbandige Dauerstrich (Continuous Wave CW)-Radarsysteme nachteilig, da damit einerseits keine absolute Abstandsinformation gewonnen werden kann und andererseits diese für eine gute räumliche Auflösung stark fokussiert sein müssen.

Nachteilig ist hierbei, dass durch die Verwendung von schmalbandigen Signalen die Störanfälligkeit der Systeme gegenüber unerwünschten Reflexionen erhöht wird und die notwendige Fokussierung impliziert die Verwendung teurer und großer Antennen. Die benötigte Relativbewegung erfordert einen zusätzlichen Antrieb, der die Pendelbewegung des Sensors erzeugt.

Mit einem schmalbandigen CW-Radarsignal ist somit keine Absolutmessung möglich.

Wird die Geometrie über eine reine Abstandsmessung, d.h. einen Abtastvorgang, bestimmt, ist es nicht möglich, die Mikrowellenstrahlung der Radarsensoren ausreichend stark zu fokussieren. Daher kommt es aufgrund des eingeschränkten Auflösungsvermögens - welches sich aus der maximal möglichen Frequenz und der daraus resultierenden Wellenlänge ergibt - zu einer Verschleifung der Abstandsinformation und somit zu einer ungenauen Bestimmung der Kantengeometrie bzw. der Kantenposition.

Die Aufgabe der Erfindung besteht daher in der Schaffung eines oben genannten Verfahrens zur Nahtverfolgung, welches während eines Schweißprozesses störunempfindlich ist und eine hohe Genauigkeit aufweist. Nachteile des Standes der Technik sollen reduziert bzw. vermieden werden.

Die Aufgabe der Erfindung wird durch ein oben genanntes Verfahren gelöst, wobei in unterschiedlichen Positionen am Schweißkopf von zumindest einem Sender die Mikrowellen abgesandt werden und die reflektierten Mikrowellen von zumindest einem am Schweißkopf angeordneten Empfänger mit einer gegenüber der Polarisationsebene des Senders in einem Winkel angeordneten Polarisationsebene mit einer Änderung der Polarisation aufgenommen werden, und vom Auswertemodul die Position der Kante zumindest anhand einer Phasenänderung der jeweiligen an den unterschiedlichen Positionen reflektierten Mikrowellen ermittelt wird. Durch die Auswertung der Polarisation der reflektierten Mikrowellen kann die Kante des Werkstücks, d.h. der Übergang zwischen dem leitenden bzw. reflektierenden Hintergrund zur isolierenden Umgebung bzw. Luft unterschieden werden, wodurch eine zuverlässige Erkennung der Kante des Werkstücks möglich wird. Das Positionierungs- bzw. Messverfahren eignet sich besonders gut zur Trennung der Kante des Werkstücks vom elektrisch leitenden Hintergrund, da die Polarisationsänderung vor allem durch die Kante hervorgerufen wird. Durch die Anordnung des Senders und Empfängers in einem Winkel zueinander kann die Signalauswertung erheblich vereinfacht werden, da der elektrisch leitende Hintergrund bereits durch die Antennenanordnung vom gewünschten Messsignal getrennt werden kann.

Vorteilhafterweise ist am Schweißkopf bzw. Schweißbrenner zumindest ein Sender- und Empfängerpaar angeordnet, wobei ein Sender und ein Empfänger in einem Winkel von 90° zum weiteren Sender und Empfänger angeordnet wird. Durch eine derartige orthogonale Anordnung linear polarisierter Antennen, d.h. einem Winkel von 90° zwischen Sendeantenne und Empfangsantenne, werden nur die Anteile der reflektierten Mikrowellen aufgenommen, bei denen eine Polarisationsdrehung stattgefunden hat.

Gemäß einem weiteren Merkmal der Erfindung werden Sender und Empfänger gemeinsam linear oder radial um den Schweißkopf bewegt und an definierten Messpositionen ein Messsignal abgesandt und empfangen. Durch die Bewegung des Senders und Empfängers wird eine synthetische Apertur quer zur zu detektierenden Kante des Werkstücks aufgespannt. Die Messungen von räumlich unterschiedlichen Positionen können zur Positionsbestimmung der Kante verwendet werden, indem der durch die Bewegung hervorgerufene Phasenverlauf im gemessenen Signal ausgewertet wird. Dadurch kann die Position der Kante des Werkstücks mit hoher Genauigkeit ermittelt werden.

Zusätzlich zur Position kann auch eine Richtung der Kante des Werkstücks zumindest anhand einer Amplitude der jeweils an den Messpositionen reflektierten Mikrowellen ermittelt werden. Die durch die Kante des Werkstücks verursachte Polarisationsdrehung ist von der Polarisation der einfallenden Mikrowelle abhängig. Somit kann diese Information zur Ermittlung der Orientierung der Kante verwendet werden. Die Richtung der Kante kann nur durch eine polarimetrische Auswertung zuverlässig detektiert werden.

Zusätzlich zur Position und Richtung der Kante des Werkstücks kann auch die Breite des Spalts zwischen den zu verschweißenden Werkstücken bestimmt werden. Dabei ist es von Vorteil, wenn für die Spaltbestimmung die Dicke des Werkstücks bekannt ist. Wird die Radarantenne mit gleicher Polarisation von Sender und Empfänger über die zu verschweißenden Werkstücke bewegt, kann aufgrund der entfernungsabhängigen Phase auf das Entfernungsprofil geschlossen werden und daher bei bekannter Blechdicke auf die Breite des Spalts zwischen den Werkstücken rückgeschlossen werden.

Vorteilhafterweise wird in den unterschiedlichen Messpositionen zumindest ein Sender und ein Empfänger angeordnet, wobei das Messsignal von einem Sender ausgesandt wird und das reflektierte Messsignal von zumindest einem Empfänger an einer winkelig dazu angeordneten Messposition empfangen und ausgewertet wird.

Der Sender in den einzelnen um den Schweißkopf angeordneten Messpositionen kann aufeinanderfolgend aktiviert werden, wobei die reflektierten Messsignale immer von zumindest einem Empfänger aufgenommen und an das Auswertemodul zur Positionsbestimmung übergeben werden.

Idealerweise werden für die Positionsbestimmung über eine Ein- und/oder Ausgabevorrichtung die Art der Schweißaufgabe, wie z.B. Stumpfstoß für I-Naht, Stumpfstoß für V-Naht, Überlappungsstoß oder T-Stoß für Kehlnaht, eingestellt. Dadurch ist es möglich, anhand der besten Übereinstimmung auf die vorliegenden Parameter (Position, Orientierung, Spalt etc.) rückzuschließen. Die Kenntnis der Geometrie ermöglicht eine Berechnung der zu erwartenden Reflexionen in Abhängigkeit der Position und Orientierung der Radarantennen sowie der Lage der Schweißaufgabe.

Entsprechend der eingegebenen Schweißaufgabe kann ein hinterlegtes Modell, welches in Form eines gespeicherten Messsignals oder einer hinterlegten Form zur Berechnung des Modells ausgeführt wird, aufgerufen werden, welches vom Auswertemodul mit den empfangenen Messsignalen verglichen wird. Durch den Vergleich des Modells mit den gemessenen Messsignalen können so die optimalen Parameter, welche die Lage bestmöglich beschreiben, bestimmt werden.

Vorteilhafterweise wird aufgrund der Leistung bzw. Intensität des empfangenen Messsignals eine Grobpositionierung des Schweißkopfes zum Werkstück vom Auswertemodul bestimmt.

Gelöst wird die erfindungsgemäße Aufgabe auch durch ein Verfahren zur modellunterstützten Positionierung eines Schweißkopfes einer Roboterschweißanlage, wobei das ausgewertete Messsignal vom Auswertemodul an ein Modellberechnungsmodul übergeben wird, wobei vom Modellberechnungsmodul ein gespeichertes Modell, in dem mehrere Parameter definiert sind, aktiviert wird, welches über eine durch eine Ein- und/oder Ausgabevorrichtung eingegebene Nahtgeometrie ausgewählt wird, und durch Verändern vordefinierter Parameter das berechnete Modell an das ausgewertete Messsignal angeglichen wird, bis eine definierte Übereinstimmung vorhanden ist.

Die vorliegende Erfindung wird anhand der beigefügten, schematischen Zeichnungen näher erläutert. Darin zeigen:
Fig. 1 eine schematische Darstellung eines Schweißgeräts;
Fig. 2 das erfindungsgemäße Antennensystem am Schweißkopf vor einem Werkstück positioniert schematisch dargestellt;
Fig. 3 das Antennensystem mit einem Verdrehwinkel zur Kante des Werkstücks schematisch dargestellt;
Fig. 4 eine zweite Variante des Antennensystems schematisch dargestellt;
Fig. 5 eine dritte Variante des Antennensystems schematisch dargestellt;
Fig. 6 eine Auswertung der Amplitude der reflektierten Wellen des Antennensystems; und
Fig. 7 eine Auswertung der Phase der reflektierten Wellen des Antennensystems.

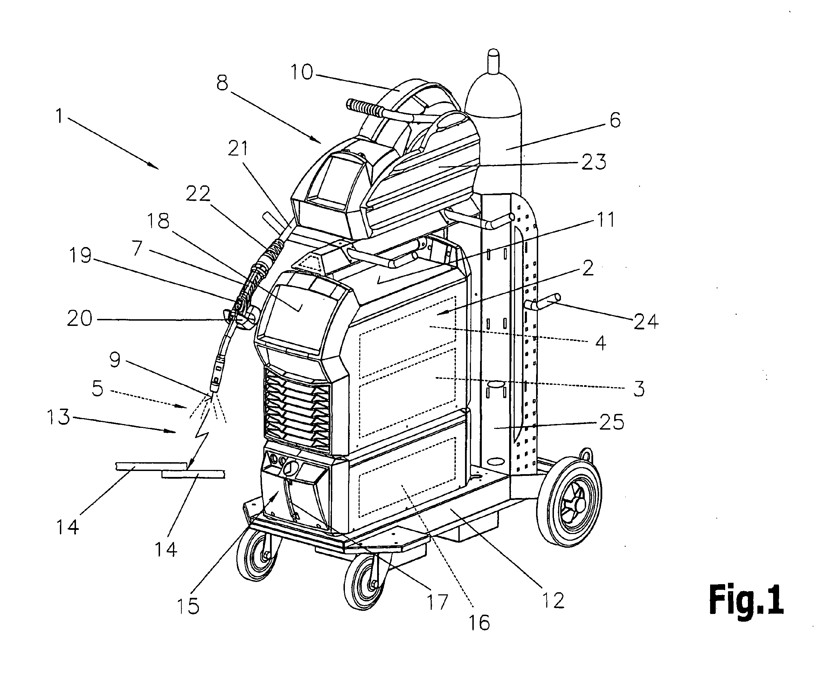

Fig. 1 zeigt ein Schweißgerät 1 für verschiedenste Prozesse bzw. Verfahren, wie z.B. MIG/MAG-Schweißen bzw. WIG/TIG-Schweißen oder Elektroden-Schweißverfahren, Doppeldraht/Tandem-Schweißverfahren, Plasma- oder Lötverfahren usw.. Das Schweißgerät 1 umfasst eine Stromquelle 2 mit einem darin angeordneten Leistungsteil 3, einer Steuervorrichtung 4 und weiteren nicht dargestellten Komponenten und Leitungen, wie beispielsweise einem Umschaltglied, Steuerventilen usw.. Die Steuervorrichtung 4 ist beispielsweise mit einem Steuerventil verbunden, welches in einer Versorgungsleitung für ein Gas 5, insbesondere ein Schutzgas, wie beispielsweise CO₂, Helium oder Argon und dergl., zwischen einem Gasspeicher 6 und einem Schweißbrenner 7 bzw. einem Brenner angeordnet ist. Zudem kann über die Steuervorrichtung 4 noch ein Drahtvorschubgerät 8, welches für das MIG/MAG-Schweißen üblich ist, angesteuert werden, wobei über eine Versorgungsleitung ein Zusatzwerkstoff bzw. ein Schweißdraht 9 von einer Vorratstrommel 10 bzw. einer Drahtrolle in den Bereich des Schweißbrenners 7 zugeführt wird. Selbstverständlich kann das Drahtvorschubgerät 8 im Schweißgerät 1, insbesondere im Gehäuse 11 der Stromquelle 2, integriert und nicht, wie in Fig. 1 dargestellt, als Zusatzgerät auf einem Fahrwagen 12 positioniert sein. Weiters kann das Drahtvorschubgerät 8 auch direkt auf das Schweißgerät 2 aufgesetzt werden, in dem das Gehäuse 11 der Stromquelle 2 an der Oberseite zur Aufnahme des Drahtvorschubgeräts 8 ausgebildet ist. In diesem Fall kann der Fahrwagen 12 auch entfallen.

Das Drahtvorschubgerät 8 kann den Schweißdraht 9 auch außerhalb des Schweißbrenners 7 an die Prozessstelle zuführen, wobei im Schweißbrenner 7 bevorzugt eine nicht abschmelzende Elektrode angeordnet ist, wie dies beim WIG/TIG-Schweißen üblich ist.

Der Strom zum Aufbauen eines Lichtbogens 13 zwischen der Elektrode bzw. dem Schweißdraht 9 und einem Werkstück 14 wird über eine Schweißleitung (nicht dargestellt) vom Leistungsteil 3 der Stromquelle 2, dem Schweißbrenner 7, insbesondere der Elektrode bzw. dem Schweißdraht 9, zugeführt. Das zu verschweißende Werkstück 14 ist über eine weitere Schweißleitung für das weitere Potential, insbesondere das Masse-Kabel, mit der Stromquelle 2 verbunden, sodass über den Lichtbogen 13 ein Stromkreis aufgebaut werden kann.

Zum Kühlen des Schweißbrenners 7 kann dieser über ein Kühlgerät 15 unter Zwischenschaltung eventueller Komponenten, wie beispielsweise einem Strömungswächter, mit einem Flüssigkeitsbehälter, insbesondere einem Wasserbehälter 16 mit einer Füllstandsanzeige 17, verbunden werden. Die einzelnen Komponenten der Schweißanlage, also die Stromquelle 2, das Drahtvorschubgerät 8 und das Kühlgerät 15, sind dabei derart ausgebildet, dass diese entsprechende Vorsprünge bzw. Ausnehmungen aufweisen, sodass sie sicher aufeinander gestapelt bzw. aufeinander gestellt werden können.

Das Schweißgerät 1, insbesondere die Stromquelle 2, weist weiters eine Ein- und/oder Ausgabevorrichtung 18 auf, über die die unterschiedlichsten Schweißparameter, Betriebsarten oder Schweißprogramme des Schweißgerätes 1 eingestellt bzw. aufgerufen und angezeigt werden können. Dabei werden die über die Ein- und/oder Ausgabevorrichtung 18 eingestellten Schweißparameter, Betriebsarten oder Schweißprogramme an die Steuervorrichtung 4 weitergeleitet und von dieser werden anschließend die einzelnen Komponenten des Schweißgerätes 1 angesteuert bzw. entsprechende Sollwerte für die Regelung oder Steuerung vorgegeben. Hierbei ist es auch möglich, dass bei Verwendung eines entsprechenden Schweißbrenners 7 auch Einstellvorgänge über den Schweißbrenner 7 vorgenommen werden können, wobei dazu der Schweißbrenner 7 mit einer Schweißbrenner-Ein- und/oder Ausgabevorrichtung 19 ausgestattet ist. Bevorzugt ist dabei der Schweißbrenner 7 über einen Datenbus, insbesondere einen seriellen Datenbus, mit dem Schweißgerät 1, insbesondere der Stromquelle 2 oder dem Drahtvorschubgerät 8 verbunden. Zum Starten des Schweißprozesses weist der Schweißbrenner 7 meist einen Startschalter (nicht dargestellt) auf, sodass durch Betätigen des Startschalters der Lichtbogen 13 gezündet werden kann. Um gegen die große Hitzeeinstrahlung vom Lichtbogen 13 geschützt zu werden, ist es möglich, dass der Schweißbrenner 7 mit einem Hitzeschutzschild 20 ausgestattet wird.

Weiters ist in dem dargestellten Ausführungsbeispiel der Schweißbrenner 7 über ein Schlauchpaket 21 mit dem Schweißgerät 1 verbunden, wobei das Schlauchpaket 21 über einem Knickschutz 22 am Schweißbrenner 7 befestigt ist. In dem Schlauchpaket 21 sind die einzelnen Leitungen, wie beispielsweise die Versorgungsleitung bzw. Leitungen für den Schweißdraht 9, für das Gas 5, für den Kühlkreislauf, für die Datenübertragung usw., vom Schweißgerät 1 zum Schweißbrenner 7 angeordnet, wogegen das Masse-Kabel bevorzugt extra an der Stromquelle 2 angeschlossen wird.

Grundsätzlich ist zu erwähnen, dass für die unterschiedlichen Schweißverfahren bzw. Schweißgeräte 1, wie beispielsweise WIG-Geräte oder MIG/MAG-Geräte oder Plasmageräte, nicht alle zuvor benannten Komponenten verwendet bzw. eingesetzt werden müssen. Hierzu ist es beispielsweise möglich, dass der Schweißbrenner 7 als luftgekühlter Schweißbrenner 7 ausgeführt werden kann, sodass beispielsweise das Kühlgerät 15 entfallen kann. Man kann also sagen, dass das Schweißgerät 1 zumindest durch die Stromquelle 2, das Drahtvorschubgerät 8 und das Kühlgerät 15 gebildet wird, wobei diese auch in einem gemeinsamen Gehäuse 11 angeordnet sein kann. Weiters ist es möglich, dass noch weitere Teile bzw. Komponenten, wie beispielsweise ein Schleifschutz 23 am Drahtvorschubgerät 8 oder ein Optionsträger 24 an einer Haltevorrichtung 25 für den Gasspeicher 6 usw., angeordnet bzw. eingesetzt werden können.

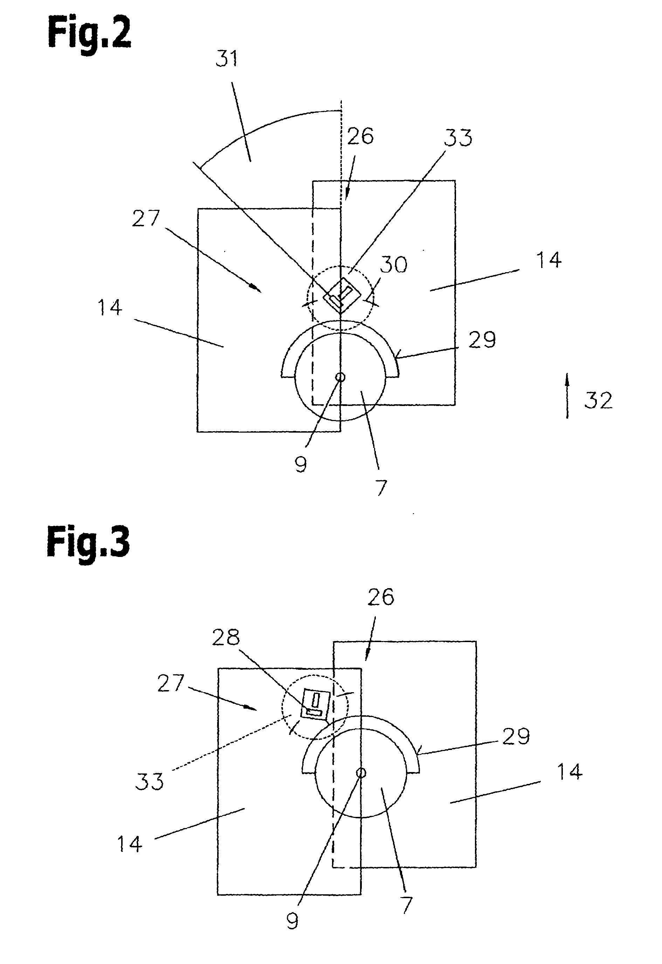

Erfingdungsgemäß ist nun aus der Zusammenschau der Fig. 2 bis 7 vorgesehen, dass in unterschiedlichen Positionen am Schweißkopf bzw. Schweißbrenner 7 von zumindest einem Sender ein Messsignal ausgesandt wird und das reflektierte Messsignal von zumindest einem am Schweißbrenner 7 angeordneten Empfänger aufgenommen wird. Die Polarisationsebene des Empfängers wird in einem Winkel zur Polarisationsebene des Senders angeordnet. Schließlich wird von einem Auswertemodul eine Auswertung zur Bestimmung einer Position und einer Ausrichtung einer Kante 26 am Werkstück 14, entlang welcher der Schweißprozess durchgeführt wird, vorgenommen. Dadurch können dem Schweißroboter Informationen über den Verlauf der unmittelbar bevorstehenden, zu verschweißenden Geometrie - also die Nahtverfolgung - zur Verfügung gestellt werden. Ebenso werden dadurch sprunghafte Korrekturen des Schweißroboters vermieden.

Bevorzugt werden zum Senden der Wellen Antennen 28 eingesetzt, welche sowohl als Sender als auch als Empfänger dienen und somit eine Sender/Empfänger-Einheit darstellen. Beispielsweise können linear polarisierte Antennen 28 eingesetzt werden. Da ein Empfänger winkelig zum Sender angeordnet wird, sind entsprechend mindestens zwei Sender/Empfänger-Einheiten für ein Antennensystem 27 am Schweißkopf bzw. Schweißbrenner 7 erforderlich. Im Folgenden wird eine Sender/Empfänger-Einheit als Antenne 28 bezeichnet. Somit kann von einem Empfänger die am Werkstück 14 reflektierte Welle empfangen werden, deren Polarisation sich von jener der gesendeten Welle unterscheidet. Diese Veränderung der Polarisation der Welle wird durch die Kante 26 am Werkstück 14 hervorgerufen, welche einen Übergang von einem elektrischen Leiter (Werkstück) zu einem elektrischen Nichtleiter (z.B. Luft) darstellt. Aufgrund der gesendeten Welle wird ein elektrisches Feld aufgebaut, das auf das elektrisch leitfähige Werkstück 14 auftrifft, wodurch eine entsprechende Stromdichte am Werkstück 14 auftritt. Die Richtung des induzierten Stromes ist von der Polarisationsebene der gesendeten Welle und von der Verteilung der spezifischen Leitfähigkeit des Materials des Werkstücks 14 abhängig. Somit beeinflusst die Kante 26 des Werkstücks als Übergang zwischen elektrischem Leiter und elektrischem Nichtleiter die Richtung der Stromdichte. Folglich hängt die Polarisation der reflektierten Welle von einem Verdrehwinkel 31 zwischen der Kante 26 des Werkstücks 14 und der Polarisationsebene der gesendeten Welle ab (Fig. 2).

Wenn die gesendete Welle mit einer zur Kante 26 des Werkstücks parallelen Polarisationsebene, also einem Verdrehwinkel 31 von 0°, gesendet wird, dann erfährt die reflektierte Welle keine Polarisationsänderung. Hat die gesendete Welle eine Polarisationsebene mit einem Verdrehwinkel 31 größer oder kleiner 0°, sind die einfallende Feldstärke und die Ausbreitung der induzierten Stromdichte in der näheren Umgebung der Kante 26 unterschiedlich, da sich am Ort der Kante 26 die induzierte Stromdichte im Wesentlichen nur entlang der Kante 26 ausbreiten kann. Somit unterscheidet sich im Bereich der Kante 26 die Richtung der einfallenden elektrischen Feldstärke von jener der Stromdichte. Diese Richtungsbeeinflussung ist vom Verdrehwinkel 31 zwischen der Kante 26 und der Polarisationsebene der gesendeten Welle abhängig. Es kommt also zu einer Polarisationsänderung der reflektierten Welle, wenn der Verlauf der Kante 26 sich von der Polarisation der gesendeten Welle unterscheidet und der Verdrehwinkel 31 nicht 90° beträgt. Der Verdrehwinkel 31 wird durch die Ausrichtung der Antenne, welche die Welle aussendet und deren Polarisation vorgibt, zur Kante 26 des Werkstücks 14 definiert. Dazu kann das Antennensystem 27 entlang einer am Schweißbrenner 7 befestigten Führungsschiene 29, welche die Bewegungsrichtung 30 vorgibt, bewegt werden. Diese Bewegungen des Antennensystems 27 können linear oder radial bzw. auf einer Kreisbahn um den Schweißbrenner 7, also im Wesentlichen quer zur Kante 26, erfolgen.

Damit vom Empfänger nur die reflektierte Welle mit veränderter Polarisation und nicht die Wellen mit der Polarisation des Senders empfangen werden, wird die Polarisationsebene der Empfangsantenne im Wesentlichen orthogonal, d.h. in einem Winkel von 90° zur Polarisationsebene des Senders (Senderantenne) angeordnet bzw. ausgerichtet. Die reflektierten Wellen mit der Polarisation des Senders werden allerdings von der Senderantenne empfangen.

Die von der ersten Antenne 28 gesendeten Wellen werden also vom Werkstück 14 reflektiert und von der ersten Antenne 28 und der zweiten Antenne 28 empfangen, wobei der Empfänger der zweiten Antenne 28 jenen Wellenanteil mit veränderter Polarisation empfängt und der Empfänger der ersten Antenne 28 jenen Wellenanteil mit unveränderter Polarisation empfängt. Entsprechend wird dies auch in umgekehrter Weise angewandt, sodass die erste Antenne 28 die mit veränderter Polarisation reflektierte Welle des Sendersignals der zweiten Antenne 28 empfängt und die zweite jenen Wellenanteil mit gleicher Polarisation empfängt.

Somit werden also die am Werkstück 14 reflektierten Wellen getrennt in Wellen mit veränderter und unveränderter Polarisation empfangen.

Mit dem Antennensystem 27 gemäß dieser Ausführung, welches aus zumindest zwei orthogonal zueinander angeordneten Antennen 28 gebildet wird, können Position, Ausrichtung und Geometriedaten (wie z.B. der Luftspalt zwischen den Teilen des Werkstücks 14) der Kante 26 und somit der Verlauf der zu verschweißenden metallischen Kante 26 einfach bestimmt werden. Für eine genaue Bestimmung der Position und Ausrichtung der Kante 26 kann das Antennensystem 27 auch um den Schweißkopf 7 bewegt werden, wodurch der Verdrehwinkel 31 zwischen Antennensystem 27 und Kante 26 verändert wird und es dementsprechend zu einem "Übersprechen" der reflektierten Wellen zwischen den Empfängern kommt. Dieses "Übersprechen" resultiert aus der beschriebenen Aufteilung der reflektierten Wellen. Dabei bleibt der Winkel zu jener Antenne 28, welche die reflektierte Welle mit veränderter Polarisation empfängt, unverändert und beträgt im Wesentlichen 90°. Anhand einer Auswertung der jeweiligen in den Empfängern empfangenen Wellenanteile, welche zumindest zum Teil aus dem "Übersprechen" resultieren, kann anschließend die Ausrichtung und die Position der Kante 26 im "Übersprechen" ermittelt werden.

Durch die rotorische Bewegung des Antennensystems 27 in einer Bewegungsrichtung 30 über dem Werkstück 14 werden vom Antennensystem 27 um den Schweißbrenner 7 bzw. Schweißkopf verschiedene Messpositionen eingenommen. An diesen Messpositionen wird das Reflexionsverhalten des Werkstücks 14 bei verschiedenen Frequenzen zur Verbesserung der Robustheit der Messmethode aufgenommen und gespeichert. Dabei wird an jeder Messposition eine Welle ausgesandt, deren Polarisation sich entsprechend dem Verdrehwinkel 31 der Messpositionen verändert. Somit verändern sich auch die Aufteilung und die Polarisation der reflektierten Welle, wodurch die Intensität des "Übersprechens" variiert.

Die Intensität der reflektierten Welle mit veränderter Polarisation ist dabei wesentlich geringer als jene der gesendeten Welle. Aus diesem Grund ist es vorteilhaft die Empfängerantenne orthogonal zur Sendeantenne auszurichten, sodass garantiert ist, dass kein Anteil der intensitätsstarken gesendeten Welle mit ursprünglicher Polarisation übersprechen kann. Dadurch können auch die Verstärkerstufen im Auswertemodul auf die niedrige Intensität abgestimmt werden.

Die Messpositionen sind vorteilhafterweise im Wesentlichen auf einem symmetrisch zur Kante 26 liegenden Halbkreis angeordnet, sodass links und rechts der Kante 26 die Messpositionen auf einem Viertelkreis liegen. Somit kann aus dem gespeicherten Reflexionsverhalten der unterschiedlichen Messpositionen jene Messposition durch das Auswertemodul ermittelt werden, welche der Position und Ausrichtung der Kante 26 entspricht. Selbstverständlich kann zwischen den Messpositionen beispielsweise eine Interpolation durchgeführt werden, und aus der interpolierten Messposition auf die Position und Ausrichtung der Kante 26 rückgeschlossen werden.

Das Antennensystem 27 kann durch verschiedene Konstruktionen die Messungen an unterschiedlichen Messpositionen durchführen. Zusätzlich kann das Antennensystem 27 auch rotatorisch bewegt werden, sodass die Anzahl der Messungen erhöht wird.

So kann das Antennensystem 27 in einer ersten Variante eine Baueinheit bilden, in welcher zwei bevorzugt um 90° versetzte Antennen 28 angeordnet sind, wie dies bereits beschrieben wurde. Dabei wird die gesamte Baueinheit um den Schweißbrenner 7 bewegt oder es werden mehrere Baueinheiten um den Schweißbrenner 7 bzw. die Lichtbogenkomponente bzw. den Schweißkopf angeordnet, wodurch der Verdrehwinkel 31 verändert und das Maximum des "Übersprechens" bestimmt werden kann.

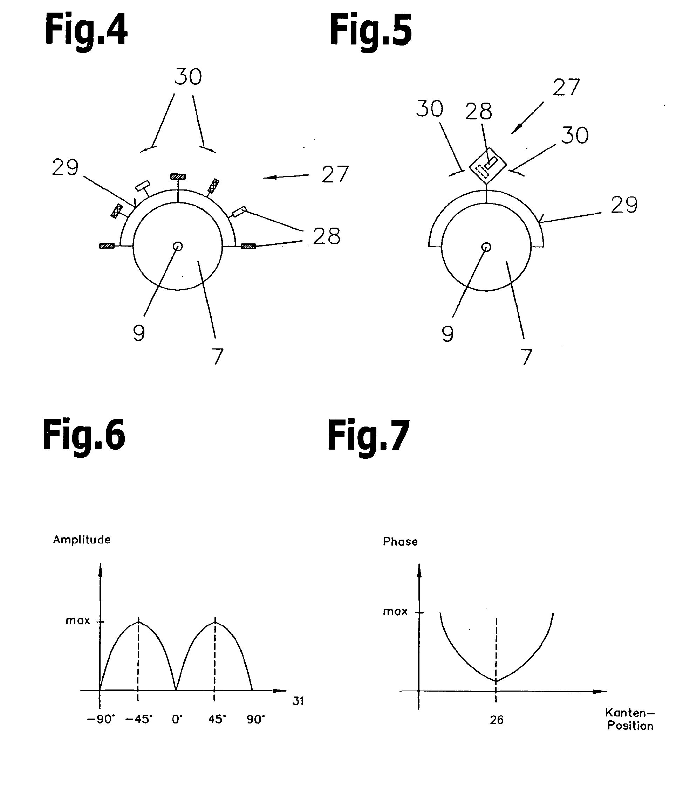

Bei einer zweiten Variante gemäß Fig. 4 wird das Antennensystem 27 aus mehreren Antennen 28 gebildet, wobei jede Antenne 28 als Sender/Empfänger-Einheit eingesetzt werden kann. Hierbei sind die Antennen 28 in einem definierten Abstand bzw. Winkel zueinander um den Schweißbrenner 7 angeordnet. Dabei ist im Wesentlichen jeder Antenne 28 eine korrespondierende, um 90° versetzte Antenne 28 zugeordnet. Im Beispiel sind sieben Antennen 28 auf einem Halbkreis jeweils um 30° zueinander versetzt angeordnet. Dabei werden immer zwei korrespondierende Antennen 28 gleichzeitig aktiviert. Eine Bewegung der Antennen 28 ist hierbei ebenso empfohlen, jedoch nicht zwingend erforderlich. Zur Realisierung der erforderlichen Messpositionen kann eine beliebige Anzahl von Antennen 28 in einer derartigen Anordnung eingesetzt werden.

Die reflektierte Welle kann mit veränderter Polarisation in einer dritten Variante auch derart empfangen werden, dass der Verdrehwinkel 31 der Antenne 28 an einer Messposition elektrisch verändert wird. Dabei werden die reflektierten Wellen sowohl in der Polarisation der gesendeten Welle als auch mit der veränderten Polarisation der reflektierten Welle empfangen. Dazu weist der Empfänger der Antenne 28 zwei Ausgänge auf, sodass die reflektierten Wellen mit unterschiedlicher Polarisation ausgewertet werden können. Gemäß Fig. 5 ist dies mit einer strichlierten Antenne 28 dargestellt, welche physikalisch nicht existiert, da die Umschaltung der Polarisation elektrisch realisiert ist. Hierzu wird beispielsweise ein Rundhohlleiter als Antenne 28 eingesetzt. Die Antenne 28 wird derart um den Schweißbrenner 7 bewegt, indem eine Rotation der Antenne 28 um die eigene Achse und eine Bewegung quer zur Kante 26 bzw. eine Rotation um den Schweißbrenner 7 stattfindet.

Die Antennen 28 erzeugen elektromagnetische Wellen, die in Abhängigkeit der Frequenz und Antennenform einen Bereich am Werkstück 14 bestrahlen, der um vieles größer ist, als die notwendige Auflösung bzw. Genauigkeit des Nahtverfolgungssystems. Beispielsweise ergibt sich bei einer Frequenz von 77 GHz ein minimal möglicher Durchmesser für den Bereich mit 98% der Strahlungsenergie von ca. 1,5 cm. Prozessbedingt ist allerdings eine Auflösung im Sub-Millimeter-Bereich (z.B.: 0,1 mm) erforderlich, welche durch die Auswertung der Veränderung der Polarisation und Messung an mehreren räumlichen Positionen erreicht wird. Die erforderliche Fokussierung auf wenige Wellenlängen kann durch die geeignete Einstellung von Frequenz und Durchmesser erreicht werden. Trifft die gesendete Welle auf eine ebene Oberfläche des Werkstücks 14 und nicht auf die Kante 26 auf, ergibt sich für die reflektierte Welle die gleiche Polarisation wie für die gesendete Welle.

An einer Kante 26 des Werkstücks 14 wird jedoch die Polarisation der reflektierten Welle gegenüber der gesendeten Welle verändert. Diese Veränderung der Polarisation ergibt sich aus dem Verdrehwinkel 31 zwischen Kante 26 und Polarisationsebene und kann durch die winkelige Anordnung von Sender und Empfänger erfasst werden. Dementsprechend werden von jener Antenne 28 des Empfängers, welche winkelig zur Antenne 28 des Senders angeordnet ist, nur reflektierte Wellen empfangen, deren Polarisation gedreht wurde.

Bei der Auswertung wird das bei den unterschiedlichen Messpositionen aufgenommene unterschiedliche Reflexionsverhalten kombiniert und daraus die Position und Ausrichtung der Kante 26 und Geometriedaten, wie Spaltbreite, bestimmt. Die Messposition kann beispielsweise alle 2 ms gewechselt werden. Die Vorwärtsbewegung des Schweißbrenners 7 hat dabei nur geringe Auswirkungen auf die Messungen.

Es werden Amplituden- und Phasenverlauf der reflektierten Wellen in Abhängigkeit der Position und Polarisationsebene betrachtet. Je nach Aufteilung der Stromrichtungen an den unterschiedlichen Messpositionen werden die Wellen jeweils mit unterschiedlicher Amplitude und Phase reflektiert. Demzufolge können aus der Auswertung der Amplitude und der Phase der reflektierten Wellen die Position (Phase) und Richtung (Amplitude) ermittelt werden.

Durch die Bewegungen des Antennensystems 27 mit Hilfe der Bewegungsrichtung 30 wird der Abstrahlungsbereich 33 (ausgeleuchteter Bereich) verschoben, wodurch auch die Position der Kante 26 im bestrahlten Bereich, also der ausgeleuchtete Bereich, relativ zur Kante 26 verschoben wird. Dementsprechend verändert sich auch die Intensität der empfangenen Wellen in Abhängigkeit des Verdrehwinkels 31 zur Kante 26. Mit der Änderung des Verdrehwinkels 31 ändert sich die Aufteilung der Wellenausbreitung und somit die Amplitude der reflektierten Welle. Entsprechend dem Antennensystem 27 sind Sender und Empfänger zweier unterschiedlicher Antennen 28 um 90° zueinander versetzt. Wird also das Antennensystem 27 im Wesentlichen in einem Halbkreis bewegt, kann der Verdrehwinkel 31 zwischen -90° und +90° liegen.

Befindet sich die Kante 26 des Werkstücks 14 auf der 0° Linie des Halbkreises, ist eine Antenne 28 ebenfalls auf der 0° Position und die zweite Antenne 28 auf der -90° bzw. +90° Position angeordnet. In diesem Fall wird die Polarisation der Wellen im Wesentlichen nicht verändert, da aufgrund der fluchtenden Ausrichtung von Sender und Kante 26 keine Änderung der Polarisation auftritt. In diesem Fall beträgt der Verdrehwinkel 31 0°.

Ist hingegen jede Antenne 28 mit einem Verdrehwinkel 31 von 45° zur Kante 26 ausgerichtet, also eine Antenne 28 mit 45° und die zweite Antenne 28 mit -45°, bewirkt die Änderung der Polarisation ein Maximum der Amplitude der reflektierten Welle, wie im Amplitudendiagramm gemäß Fig. 6 dargestellt.

Somit kann bei der polarimetrischen Auswertung aufgrund der unterschiedlichen Amplituden der reflektierten Wellen eindeutig die Richtung der Kante 26 bestimmt werden. Dabei wird vom Auswertemodul die Richtung zumindest aus den Messpositionen mit den maximalen Amplituden ermittelt, indem beispielsweise die Messposition in der Mitte dieser zwei Messpositionen als Maß für die Richtung herangezogen wird. Selbstverständlich kann der Verlauf der Amplitude zwischen den Messpositionen auch interpoliert werden, sodass auch eine Position am interpolierten Verlauf als Maß für die Richtung herangezogen werden kann.

Hingegen wird die Position der Kante 26, wie bereits erwähnt und aus Fig. 7 ersichtlich, anhand des Phasenverlaufs der reflektierten Welle ermittelt. Entsprechend wird bei jeder Messposition die Phase der reflektierten Welle erfasst und gespeichert. Somit kann die Phasenänderung zwischen den Messpositionen ausgewertet werden. Eine Änderung der Phase tritt dabei an der Kante 26 auf, da sich aufgrund der unterschiedlichen Messpositionen der Abstand ändert und somit die reflektierte Welle zeitlich verzögert empfangen wird. Diese Änderung erfolgt allerdings nicht sprunghaft, sondern in einem Kurvenverlauf, da die Welle in Abhängigkeit der Oberfläche des ausgeleuchteten Bereichs der einzelnen Messpositionen mit unterschiedlichen Verzögerungen reflektiert wird, sich also die Phase mit der Position der Kante 26 im ausgeleuchteten Bereich ändert. Die Phase der reflektierten Welle ist minimal, wenn sich die Kante 26 im mittleren Bereich des ausgeleuchteten Bereichs befindet.

Aus den gespeicherten Phasenwerten kann bei der polarimetrischen Auswertung das Minimum ermittelt und daraus die Position der Kante 26 bestimmt werden, indem das vom Auswertemodul ermittelte Minimum einer Messposition zugeordnet wird. Selbstverständlich kann anstelle oder zusätzlich zur polarimetrischen Auswertung auch eine monostatische Auswertung eingesetzt werden.

Um die Auswertung zu beschleunigen und/oder die Veränderung der Polarisation schneller zu erreichen, wird das Antennensystem 27 bevorzugt um 45° gegenüber der Kante 26 verdreht - insbesondere gemäß Fig. 2 - angeordnet. Dadurch kann vermieden werden, dass die reflektierte Welle keine Polarisationsänderung erfährt. Ebenso kann für die Positionsbestimmung über eine Ein- und/oder Ausgabevorrichtung 19 des Schweißgeräts 1 die Art der Schweißaufgabe (z.B. Stumpfstoß für I-Naht, Stumpfstoß für V-Naht, Überlappungsstoß oder T-Stoß für Kehlnaht) eingestellt werden. Dadurch kann eine schnellere Auswertung erreicht werden, da die reflektierten Wellen anhand der erwarteten reflektierten Wellen schneller und einfacher zugeordnet werden können.

Aufgrund der kombinierten translatorischen und rotatorischen Bewegung der Antennen 28 um den Schweißbrenner 7 (Fig. 2) wird die Kante 26 des Werkstücks 14 an einer Messposition aus verschiedenen Polarisationsrichtungen mit der gesendeten Welle angestrahlt und die reflektierten Wellen erfasst. Dazu wird der Verdrehwinkel 31 an einer Messposition verändert, indem die Antenne 28 verdreht wird. Durch diese zusätzliche Antennenbewegung wird die Genauigkeit der Messungen pro Messposition und das Ergebnis des Auswertemoduls entsprechend erhöht.

Aufgrund der Auswertung der Position und Richtung der Kante 26 des Werkstücks kann gegebenenfalls eine Korrektur der Position des Schweißbrenners 7 bzw. Schweißkopfs durchgeführt werden. Konstruktiv ist ein Mittelpunkt des Antennensystems 27 mit einer Mittelachse des Schweißbrenners 7 fluchtend angeordnet, sodass für eine korrekte Positionierung des Schweißbrenners 7 auch die zugeordnete Messposition fluchtend sein muss. Dabei wird über die Differenz des Winkels zwischen der Messposition und dem Mittelpunkt zum Verdrehwinkel 31 eine Distanz ermittelt, um welche die Position des Schweißbrenners 7 verändert werden muss. Anhand dieser ausgewerteten Position und Richtung kann der Schweißroboter exakt an der Kante 26 positioniert werden, wobei anhand der ermittelten Richtung die Abweichungen bis zum nächsten Messzyklus in Schweißrichtung 32 minimal gehalten werden.

Damit auch beispielsweise unerwünschte Spalten zwischen den zu verschweißenden Werkstücken 14 erkannt und die Parameter des Schweißprozesses entsprechend angepasst werden können, ist eine exakte Höheninformation erforderlich. Dies kann erfindungsgemäß mit einem mathematischen Modell berechnet werden, welches durch Variation der Parameter das gemessene bzw. vom Auswertemodul gelieferte Ergebnis simuliert, sodass die Geometrie des Spalts ermittelt werden kann. Als Basis dient eine vorher ausgewählte Nahtgeometrie, sodass ein dazu gespeichertes Simulationsergebnis bereits ähnlich dem ausgewerteten Ergebnis ist. Durch entsprechende Variation der Parameter werden die Ergebnisse angeglichen. Beispielsweise kann das Modell auch mehrere Messungen miteinander verknüpfen und derart beispielsweise die Spaltbreite bestimmt werden.

Bei dem Modell werden die Polarisationsdrehungseffekte der Wellen durch lokale Stromdichten entlang der Kante 26 des Werkstücks 14 erfasst, sodass eine modellbasierte Detektion der Kante 26 ermöglicht wird.

Weiters besteht erfindungsgemäß die Möglichkeit, das System auf komplexe Geometrien anzulernen. Dabei werden die für den Schweißprozess entscheidenden Parameter (z.B. Kantenposition, Spaltbreite etc.) variiert und vermessen. Das Antennensystem 28 wird also über der Geometrie bewegt und die Reflexionen als Messdaten erfasst. Wird die Geometrie verändert, werden auch die Reflexionen verändert. Die erhalten Messdaten können als so genanntes Reflexionsmuster in einem Speicher abgelegt werden.

Im Betrieb können die aktuellen Messdaten mit den Reflexionsmustern aus dem Speicher verglichen und auf die aktuellen Parameter rückgeschlossen werden. Aufgrund des zusätzlichen Aufwands für einen derartigen Anlernvorgang und aufgrund des hohen Speicherbedarfs ist der Anlernvorgang allerdings nur bei komplexen Geometrien sinnvoll, bei welchen eine mathematische Modellbildung zu aufwändig wäre.

Die Tatsache, dass jede Antenne 28, die als Sender genutzt wird, auch als Empfänger verwendet werden kann, wird dazu verwendet, um eine Grobpositionierung an der Fügestelle am Werkstück 14 zu ermöglichen. Dazu wird die Strahlungsleistung der gesendeten Welle und die Strahlungsleistung der empfangenen Welle überwacht und verglichen. Aus der Kenntnis der Strahlungsleistung, die auf der Sendeantenne empfangen wird, kann die empfange Strahlungsleistung an der Empfangsantenne richtig skaliert und können Auswertefehler vermieden werden. Selbstverständlich kann die Strahlungsleistung auch bei getrennten Sende- und Empfangsantennen überwacht werden.

Das Antennensystem 27 kann auch für einen Abgleich des so genannten TCP (Tool Center Point) des Schweißsystems eingesetzt werden. Dabei wird beispielsweise nach einem Verschleißteilwechsel am Schweißkopf 7 der TCP des Schweißsystems abgeglichen, indem eine Kalibrierfahrt des Schweißroboters über bekannte Geometrien der Werkstücke 14 (wie Überlappstoß, T-Stoß, Kehlnaht usw.) mit verschiedenen Werkstückdichten und Spaltbreiten durchgeführt und entsprechende Messwerte für Position, Richtung und Geometrie mit dem Antennensystem 27 aufgenommen werden. Aufgrund dieser Messwerte kann der TCP eingestellt werden.

## Patentansprüche

1. Verfahren zur Positionierung eines Schweißkopfes einer Roboterschweißanlage über einem Werkstück (14), wobei zur Positionsbestimmung ein Messsignal in Form von Mikrowellen von einem am Schweißkopf angeordneten Sender an das Werkstück (14) gesendet wird und die am Werkstück (14) reflektierten Mikrowellen von zumindest einem am Schweißkopf angeordneten Empfänger empfangen werden, und die empfangenen Mikrowellen zur Positionsbestimmung einer Kante (26) am Werkstück (14) von einem Auswertemodul ausgewertet werden, **dadurch gekennzeichnet, dass** in unterschiedlichen Positionen am Schweißkopf von zumindest einem Sender die Mikrowellen abgesandt werden und die reflektierten Mikrowellen von zumindest einem am Schweißkopf angeordneten Empfänger mit einer gegenüber der Polarisationsebene des Senders in einem Winkel angeordneten Polarisationsebene mit einer Änderung der Polarisation aufgenommen werden, und vom Auswertemodul die Position der Kante (26) zumindest anhand einer Phasenänderung der jeweiligen an den unterschiedlichen Positionen reflektierten Mikrowellen ermittelt wird.

2. Verfahren nach Anspruch 1, **dadurch gekennzeichnet, dass** am Schweißkopf zumindest ein Sender- und Empfängerpaar angeordnet wird, wobei ein Sender und ein Empfänger in einem Winkel von 90° zum weiteren Sender und Empfänger angeordnet wird.

3. Verfahren nach Anspruch 1 oder 2, **dadurch gekennzeichnet, dass** Sender und Empfänger gemeinsam linear oder radial um den Schweißkopf bewegt werden und an definierten Messpositionen ein Messsignal abgesandt und empfangen wird.

4. Verfahren nach einem der Ansprüche 1 bis 3, **dadurch gekennzeichnet, dass** zusätzlich zur Position auch eine Richtung der Kante (26) zumindest anhand einer Amplitude der jeweils an den Messpositionen reflektierten Mikrowellen ermittelt wird.

5. Verfahren nach einem der Ansprüche 1 bis 4, **dadurch gekennzeichnet, dass** zusätzlich die Breite eines Spalts zwischen den zu verschweißenden Werkstücken (14) bestimmt wird.

6. Verfahren nach Anspruch 5, **dadurch gekennzeichnet, dass** die Dicke des Werkstücks (14) eingegeben wird.

7. Verfahren nach einem der Ansprüche 1 bis 6, **dadurch gekennzeichnet, dass** in den unterschiedlichen Messpositionen zumindest ein Sender und ein Empfänger angeordnet wird, wobei das Messsignal von einem Sender ausgesandt wird und das reflektierte Messsignal von zumindest einem Empfänger an einer winkelig dazu angeordneten Messposition empfangen und ausgewertet wird.

8. Verfahren nach einem der Ansprüche 1 bis 7, **dadurch gekennzeichnet, dass** der Sender in den einzelnen um dem Schweißkopf angeordneten Messpositionen aufeinanderfolgend aktiviert wird, wobei die reflektierten Messsignale immer von zumindest einem Empfänger aufgenommen und an das Auswertemodul zur Positionsbestimmung übergeben werden.

9. Verfahren nach einem der Ansprüche 1 bis 8, **dadurch gekennzeichnet, dass** für die Positionsbestimmung über eine Ein- und/oder Ausgabevorrichtung (18) die Art der Schweißaufgabe, wie z.B. Stumpfstoß für I-Naht, Stumpfstoß für V-Naht, Überlappungsstoß oder T-Stoß für Kehlnaht, eingestellt wird.

10. Verfahren nach Anspruch 9, **dadurch gekennzeichnet, dass** entsprechend der eingegebenen Schweißaufgabe ein hinterlegtes Modell, welches in Form eines gespeicherten Messsignals oder einer hinterlegten Form zur Berechnung des Modells ausgeführt wird, aufgerufen wird, welches vom Auswertemodul mit den empfangenen Messsignalen verglichen wird.

11. Verfahren nach einem der Ansprüche 1 bis 10, **dadurch gekennzeichnet, dass** aufgrund der Leistung des empfangenen Messsignals eine Grobpositionierung des Schweißkopfes zum Werkstück (14) vom Auswertemodul bestimmt wird.

12. Verfahren zur modellunterstützten Positionierung eines Schweißkopfes einer Roboterschweißanlage über einem Werkstück (14), wobei zur Positionsbestimmung ein Messsignal in Form von Mikrowellen von einem am Schweißkopf angeordneten Sender an das Werkstück (14) gesendet wird und die am Werkstück (14) reflektierten Mikrowellen von zumindest einem am Schweißkopf angeordneten Empfänger empfangen werden, und die empfangenen Mikrowellen zur Positionsbestimmung an einer Kante (26) am Werkstück (14) von einem Auswertemodul ausgewertet werden, **dadurch gekennzeichnet, dass** das ausgewertete Messsignal vom Auswertemodul an ein Modellberechnungsmodul übergeben wird, wobei vom Modellberechnungsmodul ein gespeichertes Modell, in dem mehrere Parameter definiert sind, aktiviert wird, welches über eine Ein- und/oder Ausgabevorrichtung (18) eingegebene Nahtgeometrie ausgewählt wird, und durch Verändern vordefinierter Parameter das berechnete Modell an das ausgewertete Messsignal angeglichen wird, bis eine definierte Übereinstimmung vorhanden ist.

## Claims

1. A method for positioning a welding head of a robot welding system over a workpiece (14), wherein for the position determination a measuring signal is sent in the form of microwaves from a transmitter arranged on the welding head to the workpiece (14), and the microwaves reflected on the workpiece (14) are received by at least one receiver arranged on the welding head, and the received microwaves are evaluated by an evaluation module for determining the position of an edge (26) of the workpiece (14), **characterised in that** the microwaves are sent from at least one transmitter in different positions on the welding head, and the reflected microwaves are received, with a change of polarisation, by at least one receiver arranged on the welding head, having a polarisation plane arranged at an angle to the polarisation plane of the transmitter, and the position of the edge (26) is determined by the evaluation module at least on the basis of a phase change of the respective microwaves reflected at the different positions.

2. The method according to claim 1, **characterised in that** at least one transmitter-receiver pair is arranged on the welding head, with a transmitter and a receiver being arranged at an angle of 90° to the other transmitter and receiver.

3. The method according to claim 1 or 2, **characterised in that** transmitter and receiver are moved around the welding head together in a linear or radial manner, and a measuring signal is sent and received at defined measuring positions.

4. The method according to any one of claims 1 to 3, **characterised in that**, in addition to the position, a direction of the edge (26) is identified as well, at least by means of an amplitude of the microwaves that are reflected at the measuring positions.

5. The method according to any one of claims 1 to 4, **characterised in that**, in addition, the width of a gap between the workpieces (14) to be welded together is determined.

6. The method according to claim 5, **characterised in that** the thickness of the workpiece (14) is entered.

7. The method according to any one of claims 1 to 6, **characterised in that** at least one transmitter and one receiver are arranged in the different measuring positions, with the measuring signal being sent by a transmitter and the reflected measuring signal being received and evaluated by at least one receiver at a measuring position that is arranged at an angle thereto.

8. The method according to any one of claims 1 to 7, **characterised in that** the transmitters in the individual measuring positions arranged around the welding head are activated in succession, with the reflected measuring signals always being received and transferred to the evaluation module for the position determination by at least one receiver.

9. The method according to any one of claims 1 to 8, **characterised in that** the type of the welding task, such as butt joint for I-weld, butt joint for V-weld, lap joint or T-joint for fillet weld, is set for the position determination by means of an input and/or output device (18).

10. The method according to claim 9, **characterised in that** according to the welding task entered, a stored model, which is designed in the form of a stored measuring signal or a stored form for calculating the model, is retrieved in order to be compared to the received measuring signals by means of the evaluation module.

11. The method according to any one of claims 1 to 10, **characterised in that** the evaluation module uses the power of the received measuring signal to determine a rough positioning of the welding head with respect to the workpiece (14).

12. A method for the model-supported positioning of a welding head of a robot welding system over a workpiece (14), wherein for the position determination a measuring signal is sent in the form of microwaves from a transmitter arranged on the welding head to the workpiece (14), and the microwaves reflected on the workpiece (14) are received by at least one receiver arranged on the welding head, and the received microwaves are evaluated by an evaluation module for determining the position of an edge (26) of the workpiece (14), **characterised in that** the evaluated measuring signal is transferred from the evaluation module to a model calculation module, and a stored model containing a plurality of defined parameters is activated by the model calculation module, said model being selected by means of seam geometry entered by an input and/or output device (18), and the calculated model is compared to the evaluated measuring signal by modifying pre-defined parameters until a defined congruence is available.

## Revendications

1. Procédé de positionnement d'une tête de soudage d'une installation de soudage robotisée au-dessus d'une pièce (14), dans lequel, en vue de la détermination de la position, un signal de mesure sous forme de micro-ondes est émis vers la pièce (14) par un émetteur disposé sur la tête de soudage et les micro-ondes réfléchies sur la pièce (14) sont reçues par au moins un récepteur disposé sur la tête de soudage, et les micro-ondes reçues sont analysées par un module d'analyse afin de déterminer la position d'un bord (26) sur la pièce (14), **caractérisé en ce que** dans différentes positions sur la tête de soudage, les micro-ondes sont envoyées par au moins un émetteur et les micro-ondes réfléchies sont captées avec une variation de la polarisation par au moins un récepteur, disposé sur la tête de soudage et comportant un plan de polarisation disposé en angle par rapport au plan de polarisation de l'émetteur, et la position du bord (26) est déterminée par le module d'analyse au moins à l'appui d'une variation de phase de chacune des micro-ondes réfléchies dans les différentes positions.

2. Procédé selon la revendication 1, **caractérisé en ce qu'**au moins une paire d'émetteurs et de récepteurs est disposée sur la tête de soudage, un émetteur et un récepteur étant disposés selon un angle de 90°par rapport à l'autre émetteur et récepteur.

3. Procédé selon la revendication 1 ou 2, **caractérisé en ce que** l'émetteur et le récepteur sont déplacés conjointement de manière linéaire ou radiale autour de la tête de soudage, et un signal de mesure est envoyé et reçu dans des positions de mesure définies.

4. Procédé selon l'une quelconque des revendications 1 à 3, **caractérisé en ce que**, en plus de la position, est également déterminée une direction du bord (26) au moins à l'appui d'une amplitude des micro-ondes respectivement réfléchies dans les positions de mesure.

5. Procédé selon l'une quelconque des revendications 1 à 4, **caractérisé en ce que** l'on détermine, en plus, la largeur d'une fente entre les pièces (14) à souder.

6. Procédé selon la revendication 5, **caractérisé en ce que** l'épaisseur de la pièce (14) est entrée.

7. Procédé selon l'une quelconque des revendications 1 à 6, **caractérisé en ce que** dans les différentes positions de mesure on dispose au moins un émetteur et un récepteur, le signal de mesure étant émis par un émetteur et le signal de mesure réfléchi étant reçu par au moins un récepteur dans une position de mesure disposée en angle par rapport à celui-ci et étant analysé.

8. Procédé selon l'une quelconque des revendications 1 à 7, **caractérisé en ce que** l'émetteur est activé successivement dans les différentes positions de mesure disposées autour de la tête de soudage, les signaux de mesure réfléchis étant toujours reçus par au moins un récepteur et étant transmis vers le module d'analyse pour la détermination de la position.

9. Procédé selon l'une quelconque des revendications 1 à 8, **caractérisé en ce que** pour la détermination de la position, on règle par l'intermédiaire d'un dispositif d'entrée et/ou de sortie (18) le type d'opération de soudage, tel que le soudage bout à bout pour soudure en I, le soudage bout à bout pour soudure en V, le soudage à recouvrement ou le soudage en T pour soudure d'angle.

10. Procédé selon la revendication 9, **caractérisé en ce que** conformément à l'opération de soudage entrée, on active un modèle déposé, qui est exécuté sous la forme d'un signal de mesure stocké en mémoire ou d'une forme déposée pour le calcul du modèle, lequel est comparé par le module d'analyse aux signaux de mesure reçus.

11. Procédé selon l'une quelconque des revendications 1 à 10, **caractérisé en ce que**, sur la base de la puissance du signal de mesure reçu, le module d'analyse détermine un positionnement grossier de la tête de soudage par rapport à la pièce (14).

12. Procédé pour le positionnement assisté par un modèle d'une tête de soudage d'une installation de soudage robotisée au-dessus d'une pièce (14), dans lequel, en vue de la détermination de la position, un signal de mesure sous forme de micro-ondes est émis par un émetteur, disposé sur la tête de soudage, vers la pièce (14) et les micro-ondes réfléchies sur la pièce (14) sont reçues par au moins un récepteur disposé sur la tête de soudage, et les micro-ondes reçues sont analysées par un module d'analyse afin de déterminer la position sur un bord (26) sur la pièce (14), **caractérisé en ce que** le signal de mesure analysé est transmis par le module d'analyse vers un module de calcul de modèle, ledit module de calcul de modèle activant un modèle stocké en mémoire, dans lequel sont définis plusieurs paramètres, lequel est sélectionné selon la géométrie de la soudure entrée par l'intermédiaire d'un dispositif d'entrée et/ou de sortie (18), et, par la modification de paramètres prédéfinis, le modèle calculé est ajusté au signal de mesure analysé jusqu'à ce qu'une concordance définie soit obtenue.
